# EUROPEAN PATENT APPLICATION

(11) **EP 2 763 001 A1**
(43) Date of publication of application: **06.08.2014**
(21) Application number: 12874922.3
(22) Date of filing: 28.11.2012
(51) Int. Cl.: G06F 3/023, G06F 3/041

(54) **INFORMATION INPUT METHOD AND TOUCH SCREEN TERMINAL**

(71) Applicant: Huawei Device Co., Ltd., Shenzhen, Guangdong 518129 (CN)
(72) Inventor: XIONG, Yuanfeng, Shenzhen Guangdong 518129 (CN); LIU, Guoqing, Shenzhen Guangdong 518129 (CN)
(74) Representative: Maiwald Patentanwalts GmbH
(86) International application number: PCT/CN2012/085442
(87) International publication number: WO 2014/082223

(57) **Abstract**

Embodiments of the present application provide an information input method and a touchscreen terminal. In the embodiments of the present application, keys of a soft keyboard displayed on the touchscreen terminal include a functional key and an input key; first input information and second input information are displayed on the input key; and then the touchscreen terminal can detect a first touch signal which is input by a user on a touchscreen through the functional key and the input key, and according to preset correspondence between the first touch signal and the first input information, obtain and display the first input information corresponding to the first touch signal, which can avoid a problem of inconvenience due to a shift operation and being easy to make a mistake in the prior art, thereby improving efficiency and reliability of information input.

## Description

### TECHNICAL FIELD

The present application relates to communications technologies, and in particular, to an information input method and a touchscreen terminal.

### BACKGROUND

With the development of science and technology, more and more touchscreen terminals, such as a cell phone, a digital photo frame and a tablet computer, join in people's daily life. In a common application, a user interaction manner which is most commonly used in a touchscreen terminal is that a user inputs information through a soft keyboard displayed on a touchscreen, so as to instruct the touchscreen terminal to perform a control operation on the input information. When the touchscreen terminal is in an information input status (that is, in a process in which the user may input information through the soft keyboard displayed on the touchscreen), the user needs to shift a key currently displayed in the soft keyboard according to content of the input information, such as a letter, a figure or a symbol, so that the touchscreen terminal displays a corresponding key.

However, in the prior art, it is inconvenient to perform a shift operation, and it is easy to make a mistake, thereby lowering efficiency and reliability of information input.

### SUMMARY

Multiple aspects of the present application provide an information input method and a touchscreen terminal, which are used to improve efficiency and reliability of information input.

One aspect of the present application provides an information input method, including:
displaying, by a touchscreen terminal, a soft keyboard when the touchscreen terminal is in an information input status, where keys of the soft keyboard include a functional key and an input key, and first input information and second input information are displayed on the input key;
detecting, by the touchscreen terminal, a first touch signal which is input by a user on a touchscreen through the functional key and the input key;
obtaining, by the touchscreen terminal and according to preset correspondence between the first touch signal and the first input information, the first input information corresponding to the first touch signal; and
displaying, by the touchscreen terminal, the first input information.

According to the foregoing aspect and any possible implementation manner, an implementation manner is further provided. The detecting, by the touchscreen terminal, a first touch signal which is input by a user on a touchscreen through the functional key and the input key includes:
detecting, by the touchscreen terminal, a first touch signal which is input on the touchscreen when the user touches the functional key and the input key simultaneously; or
detecting, by the touchscreen terminal, a first touch signal which is input on the touchscreen when the user touches the functional key and the input key successively.

According to the foregoing aspect and any possible implementation manner, an implementation manner is further provided. After the displaying, by a touchscreen terminal, a soft keyboard when the touchscreen terminal is in an information input status, the method further includes:
detecting, by the touchscreen terminal, a second touch signal which is input by the user on the touchscreen through the input key;
obtaining, by the touchscreen terminal and according to preset correspondence between the second touch signal and the second input information, the second input information corresponding to the second touch signal; and
displaying, by the touchscreen terminal, the second input information.

According to the foregoing aspect and any possible implementation manner, an implementation manner is further provided. The second input information includes a letter; and the first input information includes at least one of a figure and a symbol.

Another aspect of the present application provides a touchscreen terminal, including:
a display unit, configured to display a soft keyboard when the touchscreen terminal is in an information input status, where keys of the soft keyboard include a functional key and an input key, and first input information and second input information are displayed on the input key;
a detecting unit, configured to detect a first touch signal which is input by a user on a touchscreen through the functional key and the input key, and transmit the first touch signal to an obtaining unit; and
the obtaining unit, configured to obtain, according to preset correspondence between the first touch signal and the first input information, the first input information corresponding to the first touch signal, and transmit the first input information to the display unit, where
the display unit is further configured to display the first input information.

According to the foregoing aspect and any possible implementation manner, an implementation manner is further provided. The detecting unit is specifically configured to:
detect a first touch signal which is input on the touchscreen when the user touches the functional key and the input key simultaneously; or
detect a first touch signal which is input on the touchscreen when the user touches the functional key and the input key successively.

According to the foregoing aspect and any possible implementation manner, an implementation manner is further provided, where
the detecting unit is further configured to detect a second touch signal which is input by the user on the touchscreen through the input key, and transmit the second touch signal to the obtaining unit;
the obtaining unit is further configured to obtain, according to preset correspondence between the second touch signal and the second input information, the second input information corresponding to the second touch signal, and transmit the second input information to the display unit; and
the display unit is further configured to display the second input information.

According to the foregoing aspect and any possible implementation manner, an implementation manner is further provided. The second input information includes a letter; and the first input information includes at least one of a figure and a symbol.

Another aspect of the present application provides a touchscreen terminal, including:
a touchscreen, configured to display a soft keyboard when the touchscreen terminal is in an information input status, where keys of the soft keyboard include a functional key and an input key, and first input information and second input information are displayed on the input key;
a detector, configured to detect a first touch signal which is input by a user on the touchscreen through the functional key and the input key, and transmit the first touch signal to a processor;
a memory, configured to store a first program code, where the first program code includes a first computer operation instruction; and
the processor, executing the first program code, and configured to obtain, according to preset correspondence between the first touch signal and the first input information, the first input information corresponding to the first touch signal, and transmit the first input information to the touchscreen, where
the touchscreen is further configured to display the first input information.

According to the foregoing aspect and any possible implementation manner, an implementation manner is further provided. The detector is specifically configured to:
detect a first touch signal which is input on the touchscreen when the user touches the functional key and the input key simultaneously; or
detect a first touch signal which is input on the touchscreen when the user touches the functional key and the input key successively.

According to the foregoing aspect and any possible implementation manner, an implementation manner is further provided, where
the detector is further configured to detect a second touch signal which is input by the user on the touchscreen through the input key, and transmit the second touch signal to the processor;
the memory is further configured to store a second program code, where the second program code includes a second computer operation instruction;
the processor further executes the second program code, and is further configured to obtain, according to preset correspondence between the second touch signal and the second input information, the second input information corresponding to the second touch signal, and transmit the second input information to the touchscreen; and
the touchscreen is further configured to display the second input information.

According to the foregoing aspect and any possible implementation manner, an implementation manner is further provided. The second input information includes a letter; and the first input information includes at least one of a figure and a symbol.

It can be known from the foregoing technical solutions that, in the embodiments of the present application, the keys of the soft keyboard displayed on the touchscreen terminal include the functional key and the input key; the first input information and the second input information are displayed on the input key; and then the touchscreen terminal can detect the first touch signal which is input by the user on the touchscreen through the functional key and the input key, and according to the preset correspondence between the first touch signal and the first input information, obtain and display the first input information corresponding to the first touch signal, which can avoid a problem of inconvenience due to a shift operation and being easy to make a mistake in the prior art, thereby improving the efficiency and the reliability of the information input.

### BRIEF DESCRIPTION OF DRAWINGS

To describe the technical solutions in the embodiments of the present application or in the prior art more clearly, the following briefly introduces accompanying drawings required for describing the embodiments or the prior art. Apparently, the accompanying drawings in the following description show some embodiments of the present application, and persons of ordinary skill in the art may further obtain other drawings according to these accompanying drawings without creative efforts.
FIG. 1 is a schematic flow chart of an information input method according to an embodiment of the present application;
FIG. 2 is a schematic diagram of keys of a soft keyboard displayed by a touchscreen terminal in an embodiment corresponding to FIG. 1;
FIG. 3 is a schematic structural diagram of a touchscreen terminal according to another embodiment of the present application; and
FIG. 4 is a schematic structural diagram of a touchscreen terminal according to another embodiment of the present application.

### DESCRIPTION OF EMBODIMENTS

To make the objectives, technical solutions, and advantages of embodiments of the present application more comprehensible, the following clearly and completely describes the technical solutions in the embodiments of the present application with reference to the accompanying drawings in the embodiments of the present application. Apparently, the embodiments to be described are a part rather than all of the embodiments of the present application. All other embodiments obtained by persons of ordinary skill in the art based on the embodiments of the present application without making creative efforts shall fall within the protection scope of the present application.

In addition, the term "and/or" in this document is only an association relationship for describing associated objects, and represents that three relationships may exist, for example, A and/or B may represent the following three cases: only A exists, both A and B exist, and only B exists. In addition, the character "/" in this document usually represents that the former and latter associated objects are in an "or" relationship.

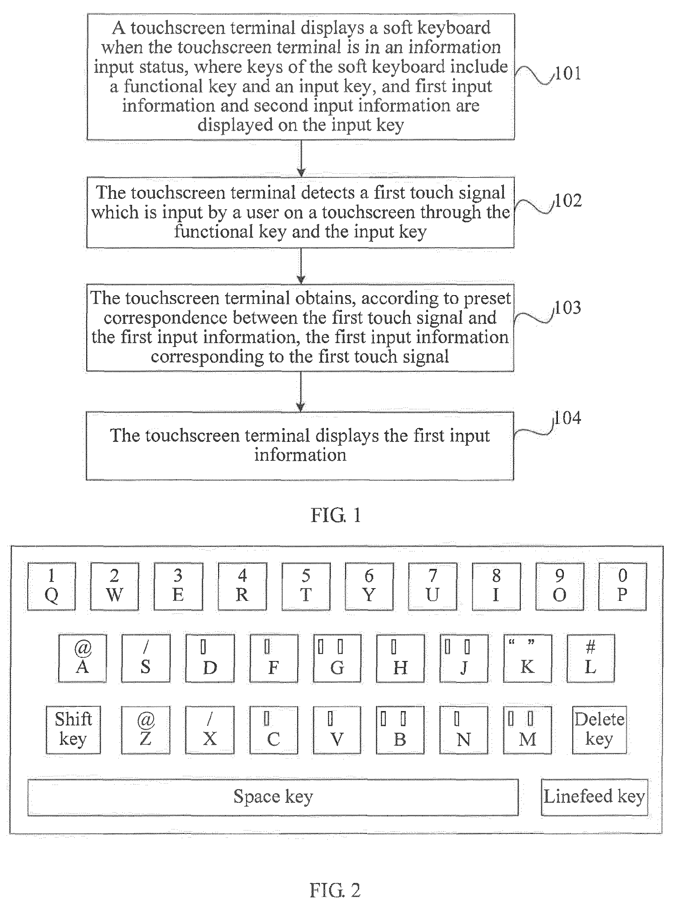

FIG. 1 is a schematic flow chart of an information input method according to an embodiment of the present application, as shown in FIG. 1.

101: A touchscreen terminal displays a soft keyboard when the touchscreen terminal is in an information input status, where keys of the soft keyboard include a functional key and an input key, and first input information and second input information are displayed on the input key.

102: The touchscreen terminal detects a first touch signal which is input by a user on a touchscreen through the functional key and the input key.

103: The touchscreen terminal obtains, according to preset correspondence between the first touch signal and the first input information, the first input information corresponding to the first touch signal.

104: The touchscreen terminal displays the first input information.

It should be noted that, in this embodiment, the functional key may be a shift key (Shift) in the prior art, or may also be a newly-added functional key, which is not limited in this embodiment.

Optionally, in one possible implementation manner of this embodiment, in 102, the touchscreen terminal may specifically detect a first touch signal which is input on the touchscreen when the user touches the functional key and the input key simultaneously. For example, first, the user may use one finger to continuously touch the functional key, and then use another finger to touch the input key, so that the touchscreen terminal detects the first touch signal which is input by the user on the touchscreen.

Optionally, in one possible implementation manner of this embodiment, in 102, the touchscreen terminal may specifically detect a first touch signal which is input on the touchscreen when the user touches the functional key and the input key successively. For example, first, the user may use one finger to touch the functional key, and then touch the input key, so that the touchscreen terminal detects the first touch signal which is input by the user on the touchscreen.

Optionally, in one possible implementation manner of this embodiment, after 101, the touchscreen terminal may further detect a second touch signal which is input by the user on the touchscreen through the input key; and then, the touchscreen terminal may obtain, according to preset correspondence between the second touch signal and the second input information, the second input information corresponding to the second touch signal, and the touchscreen terminal displays the second input information.

Optionally, in one possible implementation manner of this embodiment, the second input information may include, but is not limited to, a letter; and the first input information may include, but is not limited to, at least one of a figure and a symbol.

In order to make the method according to the embodiment of the present application more clearly, the following takes the shift key and the input key as examples. FIG. 2 is a schematic diagram of keys of a soft keyboard displayed by a touchscreen terminal in an embodiment corresponding to FIG. 1. As shown in FIG. 2, other keys except the shift key, a delete key, a space key and a linefeed key are input keys. Altogether, there are 24 input keys. Besides displaying a letter, the input key also displays information such as a figure or a symbol. When the touchscreen terminal is in an information input status, the touchscreen terminal displays the soft keyboard shown in FIG. 2. Assume that the user simultaneously touches the shift key and the input key on which first input information "7" and second input information "U" are displayed, so as to input a first touch signal on the touchscreen. The touchscreen terminal detects the first touch signal, and may, according to preset correspondence between the first touch signal and the first input information "7", obtain and display the first input information "7" corresponding to the first touch signal.

In this embodiment, the keys of the soft keyboard displayed on the touchscreen terminal include the functional key and the input key; the first input information and the second input information are displayed on the input key; and then the touchscreen terminal can detect the first touch signal which is input by the user on the touchscreen through the functional key and the input key, and according to the preset correspondence between the first touch signal and the first input information, obtain and display the first input information corresponding to the first touch signal, which can avoid a problem of inconvenience due to a shift operation and being easy to make a mistake in the prior art, thereby improving efficiency and reliability of information input.

It should be noted that, for brevity, the foregoing method embodiments are represented as a series of action combinations. But persons skilled in the art should be aware that the present application is not limited to a sequence of the described actions, because according to the present application, some steps may adopt another sequence or occur simultaneously. Moreover, persons skilled in the art should also be aware that the described embodiments in the specification all belong to exemplary embodiments, and the involved actions and modules are not necessarily required by the present application.

In the foregoing embodiments, the description of each of the embodiments has their respective focuses. For a part that is not described in detail in a certain embodiment, reference may be made to related descriptions in other embodiments.

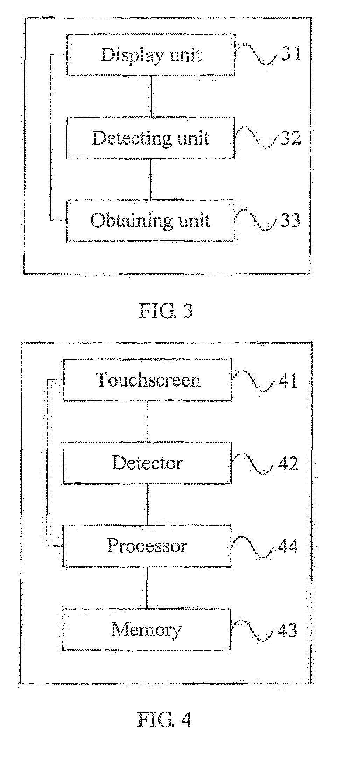

FIG. 3 is a schematic structural diagram of a touchscreen terminal according to another embodiment of the present application, as shown in FIG. 3. The touchscreen terminal of this embodiment may include a display unit 31, a detecting unit 32 and an obtaining unit 33. The display unit 31 is configured to display a soft keyboard when the touchscreen terminal is in an information input status, where keys of the soft keyboard include a functional key and an input key, and first input information and second input information are displayed on the input key; the detecting unit 32 is configured to detect a first touch signal which is input by a user on a touchscreen through the functional key and the input key, and transmit the first touch signal to the obtaining unit 33; the obtaining unit 33 is configured to obtain, according to preset correspondence between the first touch signal and the first input information, the first input information corresponding to the first touch signal, and transmit the first input information to the display unit 31; and the display unit 31 is further configured to display the first input information.

It should be noted that, in this embodiment, the functional key may be a shift key (Shift) in the prior art, or may also be a newly-added functional key, which is not limited in this embodiment.

Optionally, in one possible implementation manner of this embodiment, the detecting unit 32 may be specifically configured to detect a first touch signal which is input on the touchscreen when the user touches the functional key and the input key simultaneously. For example, first, the user may use one finger to continuously touch the functional key, and then use another finger to touch the input key, so that the detecting unit 32 detects the first touch signal which is input by the user on the touchscreen.

Optionally, in one possible implementation manner of this embodiment, the detecting unit 32 may be specifically configured to detect a first touch signal which is input on the touchscreen when the user touches the functional key and the input key successively. For example, first, the user may use one finger to touch the functional key, and then touch the input key, so that the detecting unit 32 detects the first touch signal which is input by the user on the touchscreen.

Optionally, in one possible implementation manner of this embodiment, the detecting unit 32 may be further configured to detect a second touch signal which is input by the user on the touchscreen through the input key, and transmit the second touch signal to the obtaining unit 33; accordingly, the obtaining unit 33 may be further configured to obtain, according to preset correspondence between the second touch signal and the second input information, the second input information corresponding to the second touch signal; and transmit the second input information to the display unit 31; and the display unit 31 may be further configured to display the second input information.

Optionally, in one possible implementation manner of this embodiment, the second input information may include, but is not limited to, a letter; and the first input information may include, but is not limited to, at least one of a figure and a symbol.

In this embodiment, the keys of the soft keyboard displayed through the display unit on the touchscreen terminal include the functional key and the input key; the first input information and the second input information are displayed on the input key; and then the detecting unit can detect the first touch signal which is input by the user on the touchscreen through the functional key and the input key, the obtaining unit obtains, according to the preset correspondence between the first touch signal and the first input information, the first input information corresponding to the first touch signal, and the display unit displays the first input information, which can avoid a problem of inconvenience due to a shift operation and being easy to make a mistake in the prior art, thereby improving efficiency and reliability of information input.

FIG. 4 is a schematic structural diagram of a touchscreen terminal according to another embodiment of the present application, as shown in FIG. 4. The touchscreen terminal of this embodiment may include a touchscreen 41, a detector 42, a memory 43 and a processor 44. The touchscreen 41 is configured to display a soft keyboard when the touchscreen terminal is in an information input status, where keys of the soft keyboard include a functional key and an input key, and first input information and second input information are displayed on the input key; the detector 42 is configured to detect a first touch signal which is input by a user on the touchscreen 41 through the functional key and the input key, and transmit the first touch signal to the processor 44; the memory 43 is configured to store a first program code, where the first program code includes a first computer operation instruction; the processor 44 executes the first program code and is configured to obtain, according to preset correspondence between the first touch signal and the first input information, the first input information corresponding to the first touch signal, and transmit the first input information to the touchscreen 41; and the touchscreen 41 is further configured to display the first input information.

It should be noted that, in this embodiment, the functional key may be a shift key (Shift) in the prior art, or may also be a newly-added functional key, which is not limited in this embodiment.

Optionally, in one possible implementation manner of this embodiment, the detector 42 may be specifically configured to detect a first touch signal which is input on the touchscreen 41 when the user touches the functional key and the input key simultaneously. For example, first, the user may use one finger to continuously touch the functional key, and then use another finger to touch the input key, so that the detector 42 detects the first touch signal which is input by the user on the touchscreen.

Optionally, in one possible implementation manner of this embodiment, the detector 42 may be specifically configured to detect a first touch signal which is input on the touchscreen 41 when the user touches the functional key and the input key successively. For example, first, the user may use one finger to touch the functional key, and then touch the input key, so that the detector 42 detects the first touch signal which is input by the user on the touchscreen.

Optionally, in one possible implementation manner of this embodiment, the detector 42 may be further configured to detect a second touch signal which is input by the user on the touchscreen 41 through the input key, and transmit the second touch signal to the processor 44; accordingly, the memory 43 may be further configured to store a second program code, where the second program code includes a second computer operation instruction; the processor 44 may execute the second program code, and may be further configured to obtain, according to preset correspondence between the second touch signal and the second input information, the second input information corresponding to the second touch signal, and transmit the second input information to the touchscreen 41; and the touchscreen 41 may be further configured to display the second input information.

Optionally, in one possible implementation manner of this embodiment, the second input information may include, but is not limited to, a letter; and the first input information may include, but is not limited to, at least one of a figure and a symbol.

In this embodiment, the keys of the soft keyboard displayed on the touchscreen by the touchscreen terminal include the functional key and the input key; the first input information and the second input information are displayed on the input key; and then the detector can detect the first touch signal which is input by the user on the touchscreen through the functional key and the input key, the processor obtains, according to the preset correspondence between the first touch signal and the first input information, the first input information corresponding to the first touch signal, and the touchscreen displays the first input information, which can avoid a problem of inconvenience due to a shift operation and being easy to make a mistake in the prior art, thereby improving efficiency and reliability of information input.

Those skilled in the art may clearly understand that, for ease and concision of description, for specific working processes of the system, apparatus, and unit described in the foregoing, reference may be made to the corresponding processes in the foregoing method embodiments, and details are not repeatedly described herein.

In several embodiments of this application, it should be understood that the disclosed system, apparatus, and method may be implemented in other manners. For example, the described apparatus embodiment is merely exemplary. For example, dividing of the units is merely a kind of logical function dividing and there may be other dividing manners in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separated, and parts shown as units may or may not be physical units, may be located in one position, or may be distributed on multiple network units. A part or all of the units may be selected according to an actual need to achieve the objectives of the solutions of the embodiments.

In addition, functional units in the embodiments of the present application may be integrated into one processing unit, each of the units may also exist alone physically, and two or more than two units may also be integrated into one unit. The integrated unit may be implemented in a form of hardware, and may also be implemented in a form of hardware plus a software functional unit.

The integrated unit implemented in the form of software functional unit may be stored in a computer readable storage medium. The software functional unit is stored in a storage medium, and includes several instructions used to enable a computer device (which may be a personal computer, a server, or a network device, or the like) or a processor (processor) to perform part of the steps of the methods in the embodiments of the present application. The storage medium includes: any medium that is capable of storing program code, such as a USB flash disk, a removable hard disk, a read-only memory (Read-Only Memory, ROM), a random access memory (Random Access Memory, RAM), a magnetic disk, or an optical disk.

Finally, it should be noted that the foregoing embodiments are merely intended for describing the technical solutions in the present application, rather than limiting the present application. Although the present application is described in detail with reference to the foregoing embodiments, persons of ordinary skill in the art should understand that they may still make modifications to the technical solutions described in the foregoing embodiments, or make equivalent replacements to part of the technical features of the technical solutions described in the foregoing embodiments; however, these modifications or replacements do not make the essence of the corresponding technical solutions depart from the spirit and scope of the technical solutions of the embodiments of the present application.

## Claims

1. An information input method, comprising:
displaying, by a touchscreen terminal, a soft keyboard when the touchscreen terminal is in an information input status, wherein keys of the soft keyboard comprise a functional key and an input key, and first input information and second input information are displayed on the input key;
detecting, by the touchscreen terminal, a first touch signal which is input by a user on a touchscreen through the functional key and the input key;
obtaining, by the touchscreen terminal and according to preset correspondence between the first touch signal and the first input information, the first input information corresponding to the first touch signal; and
displaying, by the touchscreen terminal, the first input information.

2. The method according to claim 1, wherein the detecting, by the touchscreen terminal, a first touch signal which is input by a user on a touchscreen through the functional key and the input key comprises:
detecting, by the touchscreen terminal, a first touch signal which is input on the touchscreen when the user touches the functional key and the input key simultaneously; or
detecting, by the touchscreen terminal, a first touch signal which is input on the touchscreen when the user touches the functional key and the input key successively.

3. The method according to claim 1 or 2, wherein after the displaying, by a touchscreen terminal, a soft keyboard when the touchscreen terminal is in an information input status, the method further comprises:
detecting, by the touchscreen terminal, a second touch signal which is input by the user on the touchscreen through the input key;
obtaining, by the touchscreen terminal and according to preset correspondence between the second touch signal and the second input information, the second input information corresponding to the second touch signal; and
displaying, by the touchscreen terminal, the second input information.

4. The method according to any one of claims 1 to 3, wherein the second input information comprises a letter; and the first input information comprises at least one of a figure and a symbol.

5. A touchscreen terminal, comprising:
a display unit, configured to display a soft keyboard when the touchscreen terminal is in an information input status, wherein keys of the soft keyboard comprise a functional key and an input key, and first input information and second input information are displayed on the input key;
a detecting unit, configured to detect a first touch signal which is input by a user on a touchscreen through the functional key and the input key, and transmit the first touch signal to an obtaining unit; and
the obtaining unit, configured to obtain, according to preset correspondence between the first touch signal and the first input information, the first input information corresponding to the first touch signal, and transmit the first input information to the display unit, wherein
the display unit is further configured to display the first input information.

6. The touchscreen terminal according to claim 5, wherein the detecting unit is specifically configured to:
detect a first touch signal which is input on the touchscreen when the user touches the functional key and the input key simultaneously; or
detect a first touch signal which is input on the touchscreen when the user touches the functional key and the input key successively.

7. The touchscreen terminal according to claim 5 or 6, wherein
the detecting unit is further configured to detect a second touch signal which is input by the user on the touchscreen through the input key, and transmit the second touch signal to the obtaining unit;
the obtaining unit is further configured to obtain, according to preset correspondence between the second touch signal and the second input information, the second input information corresponding to the second touch signal, and transmit the second input information to the display unit; and
the display unit is further configured to display the second input information.

8. The touchscreen terminal according to any one of claims 5 to 7, wherein the second input information comprises a letter; and the first input information comprises at least one of a figure and a symbol.

9. A touchscreen terminal, comprising:
a touchscreen, configured to display a soft keyboard when the touchscreen terminal is in an information input status, wherein keys of the soft keyboard comprise a functional key and an input key, and first input information and second input information are displayed on the input key;
a detector, configured to detect a first touch signal which is input by a user on the touchscreen through the functional key and the input key, and transmit the first touch signal to a processor;
a memory, configured to store a first program code, wherein the first program code comprises a first computer operation instruction; and
the processor, executing the first program code, and configured to obtain, according to preset correspondence between the first touch signal and the first input information, the first input information corresponding to the first touch signal, and transmit the first input information to the touchscreen, wherein
the touchscreen is further configured to display the first input information.

10. The touchscreen terminal according to claim 9, wherein the detector is specifically configured to:
detect a first touch signal which is input on the touchscreen when the user touches the functional key and the input key simultaneously; or
detect a first touch signal which is input on the touchscreen when the user touches the functional key and the input key successively.

11. The touchscreen terminal according to claim 9 or 10, wherein
the detector is further configured to detect a second touch signal which is input by the user on the touchscreen through the input key, and transmit the second touch signal to the processor;
the memory is further configured to store a second program code, wherein the second program code comprises a second computer operation instruction;
the processor further executes the second program code, and is further configured to obtain, according to preset correspondence between the second touch signal and the second input information, the second input information corresponding to the second touch signal, and transmit the second input information to the touchscreen; and
the touchscreen is further configured to display the second input information.

12. The touchscreen terminal according to any one of claims 9 to 11, wherein the second input information comprises a letter; and the first input information comprises at least one of a figure and a symbol.
